# EUROPEAN PATENT APPLICATION

(11) **EP 4 019 818 A1**
(43) Date of publication of application: **29.06.2022**
(21) Application number: 20216270.7
(22) Date of filing: 22.12.2020
(51) Int. Cl.: F16L 1/036, F16L 37/252, F16L 55/165

(54) **A PIPE SECTION, A PIPE, AND A METHOD FOR REPLACING A SEWER PIPE IN A TRENCHLESS WAY**

(71) Applicant: Plastmore AG, 5436 Würenlos (CH)
(72) Inventor: Weber, George, 9500 Wil (CH); Wührleitner, Patrick, 9500 Wil (CH)
(74) Representative: Hepp Wenger Ryffel AG

(57) **Abstract**

The invention discloses a pipe section, especially sewer pipe section, for trenchless replacement of buried pipes with a cylindrical pipe section with at least one bayonet connecting member at both ends and a method for replacing buried pipes.

## Description

The invention concerns a pipe section, a pipe and a method for replacing sewer pipes in a trenchless way in a cost effective and efficient manner.

Trenchless pipe replacement is generally known in the art and widely used so that digging a trench can be avoided and working time and/or money can be minimized.

According to the known state of the art, trenchless pipe replacement can be carried out using inlining procedures or conventional burst lining methods.

The inlining procedure is in general performed through using a synthetic resin-soaked plastic hose that is inserted into the duct and then cured thermally or with UV light to form the new "pipe within a pipe".

In the conventional burst lining method, the old pipe material is cut or broken by pulling a head piece from the opposite end of the pipe, which is wider than the pipe, through the pipes to pull in a new pipe.

Both of these methods are costly, labour-intensive, and require machinery and/or tools and/or intensive preliminary work. Especially for short and/or small sewer pipes, e.g. household connections, and pipes which are not exposed to high pressure this is not always an efficient replacement method.

It is therefore an object of the present invention to overcome the disadvantages of the prior art and to present a device enabling a trenchless pipe replacement which can be carried out in a cost effective and efficient manner with as little manpower and tools and/or machine use as possible.

The object is solved by a pipe section, a pipe and a method according to the independent claims.

In particular, the object is solved by a pipe section, in particular a sewer pipe section, for replacing buried pipes without digging a trench. The pipe section comprises a cylindrical pipe member with a first and second end, at least one connecting element at the first end and at least one connecting element at the second end. The pipe section's connecting elements comprise a primary bayonet connecting member at the first end and a secondary bayonet connecting member at the second end.

The invention discloses separate connectable pipe sections which make it possible to refurbish sewer pipes in tight spaces.
The pipe section shall be insertable into the old sewer pipe and preferably adapted to correspond to the known pipe diameters to be widely applicable.

In contrast to the inlining procedure, the pipe length can thus be flexibly adjusted in a stepwise way without having to rely on an explicit predertemined pipe length and preliminary preparations. This creates adaptability and flexibility to refurbish a corresponding pipe and enables the user to easily adjust the use of pipe sections to the individual problem and additionally reduces costs.

The connecting element on the first end can be arranged on the outer surface of the pipe section, the connecting element on the second end can be arranged on the inner surface of the pipe section.

This way the connection elements of two sections are able to perfectly interlock.

The first and second end of the pipe sections comprising primary and corresponding secondary bayonet connecting members allow for a tool-free handling of the pipe sections and rendering the pipe sections connectable due to the bayonet connecting members.

This maintains the big advantage of not being dependent on digging a trench or breaking walls because pipe sections can be handled individually and only assembled and connected at/in the target pipe. Thus, the pipe sections provide a high usability and low labour input for certain pipe replacements.

In a preferred embodiment the pipe sections connections are rendered durable, in respect to the force that can be supported by the connecting elements, by having a large contact area at the first and second end. The large contact area at the first and second end of the pipe section is characterized in that the wall thickness is thinner than that of the wall thickness of the cylindrical pipe member. The contact area shall preferably extend over a maximum of 20 per cent of the longitudinal axis of the pipe section. Wherein the contact area denotes the contact are of one end of the pipe section.

The pipe segments are preferably designed in such a way that the diameters correspond to conventional pipe diameters, in particular sewer pipes, and can continue to fulfil the function of the pipe to be replaced.

The pipe section can preferably comprise a primary circumferential connecting member at the first end and a secondary circumferential connecting member at the second end. The primary circumferential connecting member can be a groove while the second circumferential connecting member can be a corresponding tongue or a bead or vice versa.

The primary and secondary circumferential connecting members are formed corresponding to one another to form an interlocking connection which allows for synergetic fastening means that can be attached simultaneously in the process of connecting the primary and secondary bayonet connecting member.

The circumferential connecting members increase the resistance to longitudinal force transmission along the pipe's longitudinal axis if a connection between pipe sections is formed.

In a preferred design one of the circumferential connecting member is placed on the very top of one of the second end of the pipe section and the other at the very bottom of the first end of the pipe section. The circumferential connecting elements preferably circularly encompass the pipe section. Additionally, the circumferential connecting elements are preferably symmetrical with respect to rotation around the longitudinal axis of the pipe section, as this facilitates installation and minimizes the chance of errors during application.

The pipe section's primary and/or secondary circumferential connecting member can preferably comprise a groove of a minimum groove depth of 1/3 of the cylindrical pipe member's wall thickness.

The wall thickness of the cylindrical pipe member is the width of the ring of a cross section of the pipe section.
The depth of the groove is essential for forming an interlocking connection and is designed to allow primary and secondary circumferential connecting members to interlock as form-fitting as possible, while still ensuring the structural integrity of the first and second end of the pipe section. The feature of a primary and secondary circumferential connecting member offers the advantage that they can be fastened with the same plug-and-turn movement required to forming a connection between the primary and secondary bayonet connecting members.

The minimum height of the primary and/or secondary bayonet connecting member section in radial direction of the pipe is 1/3 of the cylindrical pipe member's wall thickness.

The primary and secondary bayonet connecting members have the advantage that a rotation of the pipe section is prevented in at least one direction in addition to longitudinal force transmission when a fixed connection has been formed.
The highest possible height of the primary and secondary bayonet connecting members, with concurrent maintained structural integrity of the first and second end, allows a fixed connection, whereas the primary and secondary bayonet connecting members preferably have essentially the same height in order to be form-fit lockable. The height of the primary and secondary bayonet connecting member describes the extension of the primary and secondary bayonet connecting member from the surface of the connecting element.

A pipe section can preferably have the maximum longitudinal length of maximum 100 cm, especially preferably maximum 80 cm, in particular preferably maximum 50 cm.

A small pipe section length along the longitudinal axis renders the pipe section applicable in confined spaces, where long conventional pipes cannot be installed. These lengths also allow for a single person to carry and install a pipe section and thus allow a single person to perform the pipe replacement without requiring additional workforce.

The invention offers the advantage that the pipe section can be installed in places where other procedures could not or would not be easily performed while at the same time requiring less labour-intensive steps and workforce.

The pipe section preferably comprises polyethylene and/or polypropylene and/or PVC and/or polybuthene.

The use of these polymers is advantageous because they are cheap, have a widespread use and are relatively light. Furthermore, these polymers have no or almost no toxic properties are easily mouldable in production, weldable and are durable in use and against environmental influences. The low price makes the pipe sections according to invention especially applicable in comparison to inlining procedures which require costly synthetic resin-soaked plastic hoses.

A pipe section's cylindrical pipe member has a minimum standard dimension ratio of in a range of 6 to 20, preferably 14 to 20. The standard dimension ratio represents the ratio between the outside diameter and wall thickness of a pipe. The minimum wall thickness that was found to be suitable for the cylindrical pipe member of the subject-matter was essentially 12 mm.

The standard dimension ratio represents a method for describing the pipe's durability against pressure. Due to the standard dimension ration of 6 to 20, preferably 14 to 20, the pipe section does not have very thick walls in comparison to the pipe sections outside diameter. Consequently, no material is wasted because the pipe section only has to withstand low pressures and the connection elements would not be applicable for high pressure pipes which would require groove clamps or other connection means which render the pipe sealed. However, the pipe section should be able to withstand a pressure of at least 0.8 bar which makes the pipe section suitable for a wide range of applications, such as sewage pipes.

At least one connecting element preferably comprises a sealing member.
The sealing member is preferably a groove with an O-ring or rubber seal.

The sealing member ensures that the pipe sections remain impermeable when connections are formed and can preferably withstand a pressure of at least 0.8 bar.
In this context, the use of additional sealing members to ensure tightness against high pressures, in particular up to 16 bar, and long service life would also be conceivable.

In order to fully seal the surface once a connection is formed preferably an O-ring or rubber seal, arranged preferably in a groove, is used in combination with close surface contact leaving no potential leaks. However, other elastomers and sealing members in combination encompassing the round cross-section of the pipe section sealing the interfaces in the pipe and the outside of the pipe are conceivable.

The primary and/or secondary bayonet connecting member preferably comprise at least one barb respectively, preferably two barbs respectively.

The barbs are preferably designed in such a way that they interlock with each other in the connected state of pipe sections, preferably form-fitting.
The formation of a connection of primary and secondary bayonet connecting member with barbs creates a resistance to a rotation around the longitudinal axis against the direction of locking the bayonet connecting members. Consequently, the connection is more resistant towards rotation which is advantageous in order to twist, push and pull a pipe section when used in replacing a pipe. When a pipe section gets in contact with the old pipe wall, torque can be created along the inserted pipe sections, which must preferably not cause the pipe to leak or hinder the installation. Therefore, the resistance to torque in addition to longitudinal force is very advantageous.

A pipe according to the invention comprises at least two pipe sections as described beforehand, wherein a connection between the pipe sections is formable by an interlock between the primary and secondary bayonet connecting members.
The primary and secondary bayonet connecting members are interlockable through rotation rendering the pipe sealed, preferably through counterclockwise rotation.

Closing the connection between pipe sections to form a continuous pipe by interlocking the bayonet connecting members is advantageous because it can be carried out quickly and preferably tool-free. If the pipe locks into place, the connection seals the pipe. This connection is not very error-prone because the bayonet connecting members can preferably only interlock if the pipe's circumferential connecting members are connected correctly rendering the pipe sealed.

The connecting elements preferably comprise essentially the same inner and outer circumference as the cylindrical pipe member if a connection is formed between a first end and a second end of a second pipe section, preferably forming an essentially even outer surface of the pipe.

The inner circumference is the circumference along the longitudinal axis which is delimited by the pipe section's inner wall surface. The outer circumference is the circumference along the longitudinal axis denoted through the outer surface of the pipe section's wall.

This embodiment of a pipe section is advantageous, as it ensures that the pipe does not get stuck during insertion during replacement and that the available space can be used to the maximum extent for usage of the replaced pipe.
Using the available space is important for the invention to be flexibly applicable because the flow through the pipe is limited by the diameter, which in turn depends on the space available in the pipe to be replaced.

The connection between the connecting members can comprise a sealing member which renders the pipe impermeable at the connection preferably through substantially air tight contact. The sealing member is preferably placed as close as possible to the transition to the interior of the pipe when a connection is formed so that no substances or moisture from inside can reach the connection elements or exit the pipe. As close as possible to the transition of the interior of the pipe is preferably the front area of a connecting element or the end area of a connecting element.

Counterclockwise rotation is preferred to fasten the connection between the primary and secondary connecting members and allows the pipe to be inserted into the pipe which is to be replaced while at the same time twisting counterclockwise which allows faster and easier insertion.

A pipe can preferably form a connection of the primary and secondary circumferential connecting member. The primary and/or secondary circumferential connecting members are preferably chamfered, in particular chamfered on one of the edges of the groove and/or the tongue.

The primary and secondary circumferential connecting members are preferably connected simultaneously to the primary and secondary bayonet connecting members. This is advantageous, because there is no need for a separate movement to be carried out in order to interlock the circumferential connecting members, as well as the bayonet connecting members and thus allows fast application and easy handling.

Since the circumferential connecting members are preferably chamfered on the edges, the pipe sections are guided more easily and connecting or disconnecting can be executed more simply. On the one hand, this prevents anything from becoming snagged or incorrectly connected. On the other hand, this means that the pipe sections can simply be pushed together to form a connection. Furthermore, this also prevents the connection to be formed incorrectly since the circumferential connecting members preferably can only interlock if the pipe sections are in the correct position.

A method for replacing a sewer pipe in a trenchless way is carried out by putting a first pipe section into a predetermined position in the ground and connecting it to a second pipe section by interlocking the connecting elements.

Through using interlocking pipe sections in the method to replace a sewer pipe, the pipe can be pulled, pushed and twisted during installation into the pipe which is to be replaced.

The pipe sections used to replace the pipe allow an adjustable length of the pipe and thus can be adapted to the problem at hand.

Especially for the refurbishment of relatively short pipes which are not subject to high pressures this method offers a good alternative that can be carried out faster and more cost effective than known methods.

A leading element can be welded to the front edge of the first pipe section, wherein the first pipe section can be cut to maximise the connecting surface.

The leading element is preferably welded to a cut part of the first pipe section, denoted as front edge of the first pipe section, in order to provide the maximum wall width as a connecting surface.

A welded leading element is advantageous because prevents anything from being able to get into the pipe and, in the worst case, block it. The leading element also guides the pipe and prevents the pipe from getting caught on the walls of the pipe which is to be refurbished. The welding element can be used to attach a pulling device at the front of the pipe and pull the pipe from the outlet of the pipe ending into place for installation and bursting the old pipe analogous to the burst lining method. This has the advantage that no additional tools for connecting the pipe sections are necessary.

Furthermore, welding a leading element to the front edge of the first pipe section can be carried out fast and the pipe can simply be cut at the desired location to remove it once the pipe has been laid.

In the following embodiments of the invention are described in detail in figures.
- Figure 1:: A tilted pipe longitudinal cross-section n a perspective side view,
- Figure 2:: a first end of a pipe section in a perspective side view,
- Figure 3:: a second end of a pipe section in a perspective side view,
- Figure 4:: a longitudinal cross-section of the pipe section in a perspective side view.
- Figure 5:: both ends of a pipe section with a longitudinal section of one end to illustrate the formation of a connection.

Identical reference signs in the figure indicate identical components.

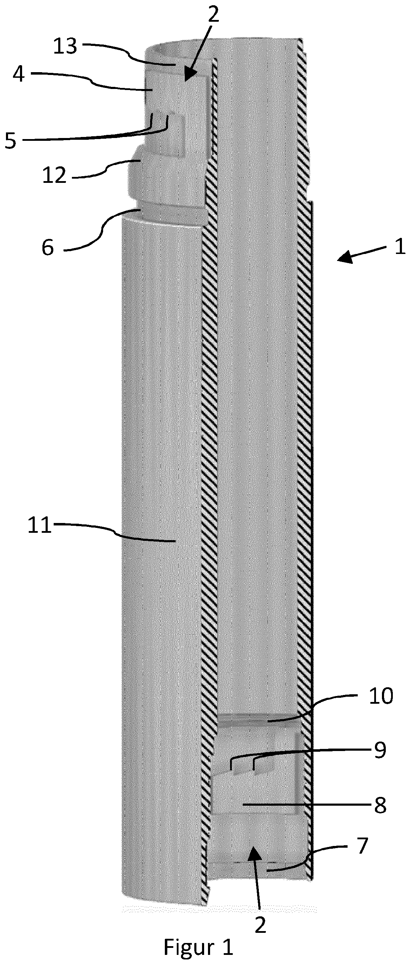

Fig. 1 shows the pipe section 1 according to a preferred embodiment. The cylindrical pipe member 11 has an essentially constant wall thickness. The ends of the tube are an integral part of the tube and are made from a single casting or extrusion.

The first end on top in Fig. 1 illustrates one connecting element 2 of the pipe section 1 and has a primary bayonet connecting member 4 with two barbs 5. The first end also displays a primary circumferential connecting member 6 which is chamfered on one of the edges of the groove 12 in order to receive the secondary circumferential connecting member 7 which is shown on the second end's connecting element 2 on the very outer edge of the pipe section 1, wherein e second end can be seen on the bottom in Fig. 1.

The second end illustrates one end of the pipe section 1 and displays second bayonet connecting members 8 with two barbs 9 on the inner surface of the pipe section 1. The first 4 and secondary bayonet connecting members 8 display L-shaped sharp-edged bulges with pointed step-shaped barbs 5, 9 protruding from the cylindrical surface of the ends of the pipe section 1.

The connecting elements 2 of the pipe section 1 display walls which in connected pairs display essentially the same wall thickness as the cylindrical pipe member 11.
The connecting elements 2 are designed to complement each other so that they can be connected to each other with an essential positive fit.

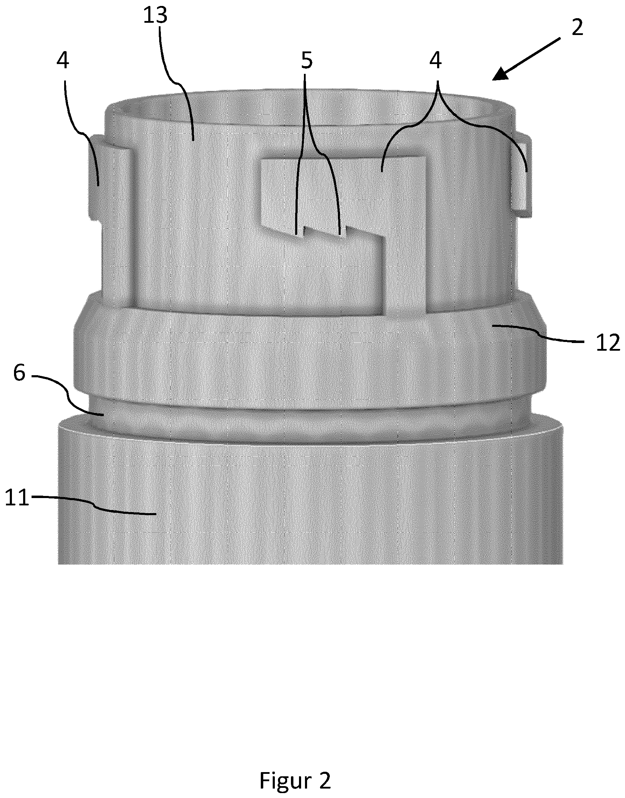

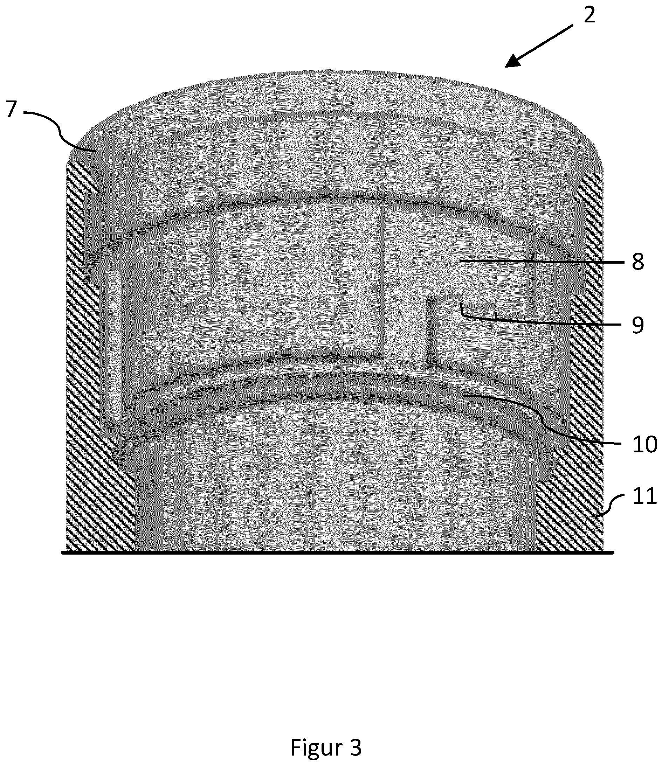

Fig. 2 shows the first end of a pipe section 1 according to a preferred design. The connecting elements comprise four L-shaped bayonet connecting members 4 facing outwards from the outside surface of the pipe section 1. The bayonet connecting members 4, 8 comprise barbs 5 formed backwards to the bayonet connecting member, preventing it from moving backwards and being pulled away from the other bayonet connecting member 4, 8, if a connection has been formed. This prevents a clockwise rotation which would unlock the bayonet connecting members 4, 8.
The upper cylindrical area 13 around the upper edge shown in Fig. 2 is used for sealing the pipe with the sealing member 10 shown in Fig. 3.

Fig. 3 displays the second end of the pipe section 1 as longitudinal section in order to see the secondary bayonet connecting members 8 with barbs 9 and circumferential connecting member 10.
The connecting elements 2 comprise four L-shaped bayonet connecting members 8 in total facing inwards from the inside surface of the pipe section 1.
The secondary circumferential connecting member 7 is displayed at the upper edge of the pipe section's second end. The secondary circumferential connecting member 7 has a sharply protruding bulge, which can be bent outwards by the chamfered shape of the primary circumferential connecting member shown in Fig. 1 during the process of forming a connection. When forming a connection with the primary circumferential connecting member 6 the sharply protruding bulge locks into place once the groove of the primary circumferential connecting member 6 is approached.
The sealing member 10 can be seen in the bottom of Fig. 3 shortly before the cylindrical pipe member 11. The sealing member 10 has a groove formed circularly along the inner side wall of the pipe section 1. The sealing member 10 also comprises a O-ring which guarantees a completely sealed pipe interior at the connection points when the pipe connection elements are connected. The O-ring is sealed off by close contact with the upper cylindrical area 13 displayed in Fig. 1 when a connection is formed.

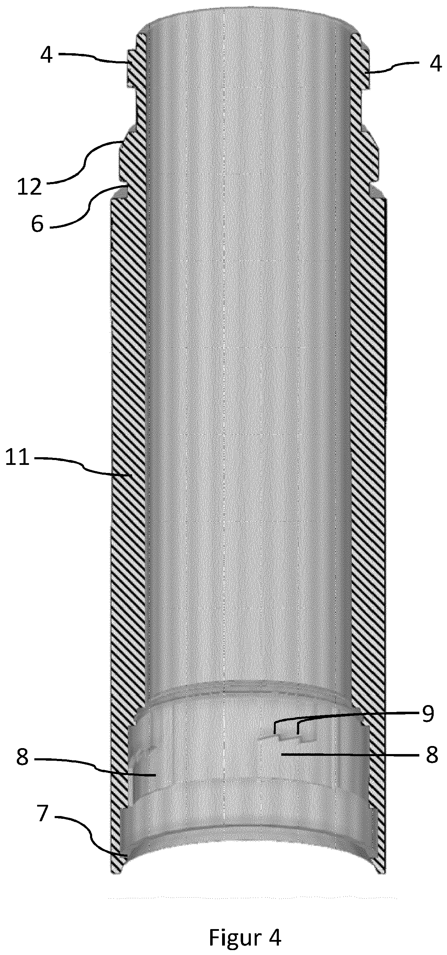

Fig. 4 displays a longitudinal section of a pipe section 1. Through the longitudinal section in the middle of the pipe the wall thickness of the cylindrical pipe member 11, the bayonet connecting element 4 can be observed. The sharp edged bulges from the cylindrical surface area of the connecting elements 2 making up the bayonet connecting element 4, 8 are displaying the same height in order for the first 4 and second bayonet connecting member 8 to be interlockable to maximum effect. Fig. 4 also displays the wall thickness of the primary 6 and secondary circumferential connecting member 7 and the chamfered edge of the groove 12.
As can be seen in Fig. 4 the wall thickness gets thinner to the upper and lower edges of the pipe section 1, not taking into account the bayonet 4, 8 and circumferential connecting members 6, 7 in order to grant as much structural stability as possible.

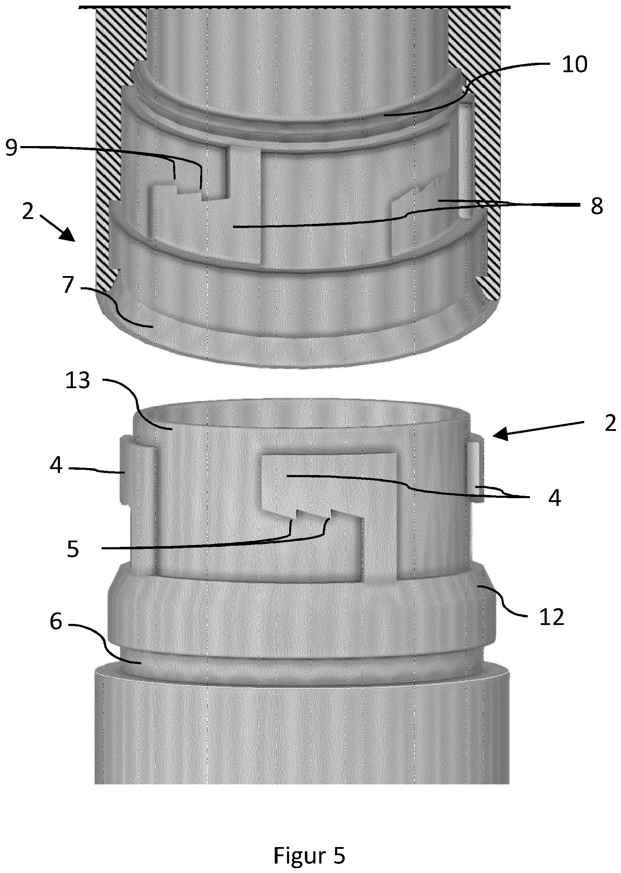

Fig. 5 illustrates the formation of a connection of the two ends of pipe sections 1. The second end is displayed as longitudinal section in order to make its connecting elements 2 viewable.
The connection can be formed through inserting the pipe section's first end displayed in the lower half of Fig. 5 into the other pipe section's second end and rotating it coaxially counterclockwise relative to the second end in order to form a connection.
This allows the bayonet connecting members 4, 8 and the circumferential connecting members 6, 7 to be connected in one and the same movement while also rendering the pipe's connection sealed through close contact of the sealing member 10 with the upper cylindrical area 13.
As the outer cylindrical surface of the upper connecting element has essentially the same outer circumference as the cylindrical pipe member 11, the connection creates a pipe with an essentially uniform outer circumference along the longitudinal axis. In addition, the inner circumference along the longitudinal axis is also constant when a connection is formed, guaranteeing no obstruction to the sewage or water flow when in use and ideally resulting in lamellar flow or at least reducing turbulence.

## Claims

1. A pipe section (1), in particular a sewer pipe section, for replacing buried pipes without the need for a trench, comprising a cylindrical pipe member (11) having a first and a second end, as well as at least one connecting element (2) at the first end and at least one connecting element (2) at the second end, **characterized in that** the connecting elements (2) comprise a primary bayonet connecting member (4) at the first end and a secondary bayonet connecting member (8) at the second end.

2. A pipe section (1) according to claim 1, **characterized in that** the pipe section (1) comprises a primary circumferential connecting member (6) at the first end and a secondary circumferential connecting member (7) at the second end.

3. A pipe section (1) according any one of the preceding claims, **characterized in that** the primary (6) and/or secondary circumferential connecting member (7) comprise a groove of a minimum groove depth of 1/3 of the cylindrical pipe member's (11) wall thickness.

4. A pipe section (1) according any one of the preceding claims, **characterized in that** the minimum height of the primary (4) and/or secondary bayonet connecting member (8) in radial direction is 1/3 of the cylindrical pipe member's (11) wall thickness.

5. A pipe section (1) according any one of the preceding claims, **characterized in that** the maximum longitudinal length of the pipe section (1) is maximum 100 cm, preferably maximum 80 cm, in particular preferably maximum 50 cm.

6. A pipe section (1) according to any one of the preceding claims, **characterized in that** the pipe section (1) comprises polyethylene and/or polypropylene and/or PVC and/or polybuthene.

7. A pipe section (1) according to any one of the preceding claims, **characterized in that** the cylindrical pipe member (11) has standard dimension ratio of 6 to 20, preferably 14 to 20, wherein the standard dimension ratio represents the ratio between the outside diameter and wall thickness of a pipe.

8. A pipe section (1) according to any one of the preceding claims, **characterized in that** at least one of the connecting elements (2) comprise a sealing member (10), preferably a groove with an O-ring or rubber seal.

9. A pipe section (1) according to any one of the preceding claims, **characterized in that** the primary (4) and/or secondary bayonet connecting member (8) comprise at least one barb (5, 9) respectively, preferably two barbs (5, 9) respectively.

10. A pipe according to any one of the preceding claims, **characterized in that** the pipe comprises at least two pipe sections (1) according to the preceding claims, wherein a connection between the pipe sections (1) is formable by an interlock between the primary (4) and secondary bayonet connecting members (8), wherein the primary (4) and secondary bayonet connecting members (8) are interlockable through rotation rendering the pipe sealed, preferably through counterclockwise rotation.

11. A pipe according to claim 10 **characterized in that** the connecting elements comprise essentially the same inner and outer circumference as the cylindrical pipe member when a connection is formed between a first end of a first pipe section and a second end of a second pipe section, preferably forming an essentially even outer surface of the pipe.

12. A pipe according to any one of the claims 10 or 11, **characterized in that** a connection of the primary (6) and secondary circumferential connecting member (7) is formed, wherein the primary (6) and/or secondary circumferential connecting member (7) preferably are chamfered.

13. A method for replacing a sewer pipe in a trenchless way **characterized in that** a first pipe section (1) according to any one of claims 1 to 10 is put into a predetermined position in the ground and connected to a second pipe section (1) by interlocking the connecting elements (2).

14. Method according to claim 13, **characterized in that** a leading element is welded to the front edge of the first pipe section (1), wherein the first pipe section (1) can be cut to maximise the connecting surface.
